# EUROPÄISCHE PATENTSCHRIFT

(11) **EP 0 922 277 B1**
(45) Veröffentlichungstag und Bekanntmachung des Hinweises auf die Patenterteilung: **22.05.2002**
(21) Anmeldenummer: 97931774.0
(22) Anmeldetag: 04.07.1997
(51) Int. Cl.: G10K 11/172

(54) **SCHALLABSORBIERENDER BAUTEIL MIT AKUSTISCHEN RESONATOREN**
SOUND ABSORBENT COMPONENT WITH ACOUSTIC RESONATORS
COMPOSANT ABSORBANT LE SON DOTE DE RESONATEURS ACOUSTIQUES

(30) Priorität: 27.08.1996 DE 19634615
(43) Veröffentlichungstag der Anmeldung: 16.06.1999
(73) Patentinhaber: FAIST Automotive GmbH & Co. KG, 86381 Krumbach (DE)
(72) Erfinder: PFAFFELHUBER, Klaus, D-89312 Günzburg (DE); KÖCK, Gerhard, D-86480 Waltershausen (DE); LAHNER, Stefan, D-86381 Krumbach (DE)
(74) Vertreter: Müller, Hans-Jürgen, Dipl.-Ing.
(86) Internationale Anmeldenummer: EP9703540
(87) Internationale Veröffentlichungsnummer: WO9809272

(56) Entgegenhaltungen:
- EP-A- 0 214 559
- EP-A- 0 683 480
- DE-A- 19 529 440
- DE-C- 4 334 984
- DE-U- 6 948 849
- DE-U- 9 414 943

## Beschreibung

Die Erfindung bezieht sich auf ein Verfahren zur Herstellung eines schallabsorbierenden Bauteils sowie auf einen schallabsorbierenden Bauteil, bei dem Kammern dünne Seitenwände aufweisen und akustische Resonatoren bilden.

Bei dem bekannten (DE-A-195 29 44) Verfahren wird eine Folie derart zu napf- oder kammerartigen Vertiefungen verformt, daß Abstände zwischen den Seitenwänden benachbarter Kammern verbleiben.

Bei einem anderen "Schallabsorber" ist es bereits bekannt (EP 0 683 480 A1), aus einer Folie zylinderförmige, napfartige Vertiefungen im Tiefziehverfahren zu bilden und an der offenen Seite, die dem Schalleinfall zugewandt ist, mit einer flüssigkeitsdichten Deckschicht abzudecken, damit sich keine Fremdteile und Verunreinigungen in den Resonatorkammern ansammeln. Dabei ist es auch bekannt, die Kammern durch flexible Schläuche zu bilden, die an der Unterseite einer solchen Deckschicht angehängt sind. Obwohl sich derartige Schallabsorber funktionell bewährt haben, ist deren Herstellung verhältnismäßig aufwendig.

Darüber hinaus ist es auch bekannt (DE 43 34 984 C1, DE-U 69 48 849 und EP 0 214 559 A3), Kammern, die in Schaumstoff gebildet sind, durch dünne Folien auszukleiden, um die porösen Kammerseitenwände gegen Verunreinigungen zu schützen. Auch hier ist die Herstellung verhältnismäßig aufwendig.

Der Erfindung liegt die Aufgabe zugrunde, schallabsorbierende Bauteile dieser Gattung noch einfacher herzustellen und dennoch für gute schallabsorbierende bzw. schalldämpfende Wirkung zu sorgen.

Gemäß der Erfindung sind die dünnen Seitenwände benachbarter Kammern im Unterschied zum oben genannten Stand der Technik nicht in größerem Abstand voneinander angeordnet, sondern sie liegen eng aneinander an oder sind vorzugsweise zu einer Trennwand integriert, welche jeweils mehr als einer Kammer zugeordnet sind. Die Kammern bilden daher mit den Trennwänden ein fachartiges Kammersystem, bei dem die eine Art Schacht bildenden Kammern nur durch die jeweiligen Trennwände voneinander abgegrenzt sind, also unmittelbar nebeneinander verlaufen.

Nach einer besonderen Ausbildung der Erfindung sind die Kammern so neben und hintereinander angeordnet, daß sie in der Kammerebene eine Art Wabensystem bilden, selbst wenn der jeweilige Kammerquerschnitt im Gegensatz zu Bienenwaben nicht sechseckig, sondern viereckig, insbesondere in Rechteckform und vor allem in Quadratform ausgebildet ist.

Funktionell besteht der Vorteil darin, daß der zur Verfügung stehende Raum mit einer optimalen Kammeranzahl ausgefüllt ist, da die Kammern nur durch die dünnen Trennwände voneinander getrennt sind, welche Folienschichtdicke bzw. doppelte Folienschichtdicke in der Größenordnung von 0,1-5 mm bevorzugt aufweisen.

Obwohl der erfindungsgemäße Bauteil in einem Stück gegossen bzw. spritzgepreßt werden kann, wobei sich die Verwendung duroplastischer Kunststoffe oder noch besser thermoplastischer Kunststoffe anbietet, findet nach einer besonderen Ausbildung der Erfindung die Herstellung im Tiefziehverfahren statt. Dabei wird aus einer Folie durch Auflegen eines insbesondere gitterartigen Tiefziehwerkzeugs dafür gesorgt, daß die Gitterstäbe die betreffenden Folienteile, auf denen sie aufliegen, unter Anwendung von Wärme und Druck so weit aus der Folienebene herausziehen bzw. die Folie so weit um die Gitterstäbe herum und von diesen weggezogen wird, daß die Verbindungsteile zwischen den Teilen, auf denen die Stäbe aufliegen, und den hochgezogenen Folienteilen die Trennwände bilden; dabei legen sich Folienteile als Seitenwände benachbarter Kammern aneinander an; sie können sogar miteinander verschmelzen. In einer besonderen Ausbildung der Erfindung ist das Gitter dreidimensional ausgeformt.

Außer der oben erwähnten funktionellen und der hier beschriebenen verfahrenstechnischen Vorteile ist auch der Materialaufwand gering und sorgen die Böden der Kammern dafür, daß keine Verunreinigungen und auch keine Feuchtigkeit in die Kammern eindringen können, ohne daß es zusätzlicher Abdeckfolien bedarf. Die aus Folie gebildeten Böden sind derart dünn, daß sie wie Membranen wirken und insofern Schall von außen in die Kammern hindurchlassen. Dort wird in Verbindung mit den Trennwänden und gegebenenfalls einem Träger, auf dem sich die freien Trennwandenden abstützen, ein Feder-Masse-System gebildet, welches bestimmte Frequenzen der Schallenergie dämpft. Durch Wahl des Materials für den Bauteil sowie durch Auswahl der Größe der Kammern und der Materialdicke der Trennwände und Böden können bestimmte Frequenzbereiche besonders stark gedämpft werden oder ist es möglich, ein verhältnismäßig breites Frequenzspektrum der Schallenergie zu dämpfen. Hat sich ein bestimmtes Folienmaterial für die Böden und Trennwände der Kammern des Bauteils als günstig erwiesen, ist es lediglich erforderlich, die Abstände der zum Tiefziehen verwendeten Stäbe des Gitters sowie das Ausmaß, um das sie die betreffenden Folienteile aus der Folienebene insbesondere senkrecht zur Folienebene tiefziehen, den gewünschten Frequenzen entsprechend zu bemessen.

Die zum Tiefziehen verwendeten Stäbe können durch Auftrennen der insbesondere verdickten Trennwandenden aus diesen entnommen werden. Bei manchen Anwendungen empfiehlt es sich aber, sogenannte "verlorene Gitter" als Tiefziehwerkzeuge zu verwenden, so daß die Stäbe in den Trennwandenden verbleiben. Dies führt zu einer verbesserten Stabilität des gesamten Bauteils, wie sie z.B. für die Anwendung als Motorhaubenabsorber gefordert wird. In diesem Fall empfiehlt es sich, wenn das Stabmaterial aus gleichem oder ähnlichem Material wie die Folie oder Platte besteht, aus der tiefgezogen wird. Die Erfindung ist nicht auf die Verwendung dünner Folien beschränkt, sondern es können auch Platten, die eine größere Dicke als Folien aufweisen, angewendet werden.

Sofern die schallabsorbierende bzw. dämpfende Wirkung bei Spezialfällen noch verbessert werden soll, empfiehlt es sich nach einer weiteren Ausbildung der Erfindung, die Böden der Kammern auf schallabsorbierende Schichten insbesondere Dämpfungsvliese zu ziehen. Ferner könnte die Folie auf ein mit z.B. Polypropylen beschichtetes Aluminiumband gezogen werden, das als Hitzeschild wirksam ist. Zur Verstärkung des schallabsorbierenden Bauteils kann es auch zweckmäßig sein, an den Böden der Kammern Verstärkungselemente, beispielsweise Verstärkungsgitter, anzubringen und gegebenenfalls die Verstärkungselemente zwischen die Böden und die zusätzliche schalldämpfende und/oder hitzeabweisende Schicht einzubringen. Derartige Verstärkungselemente können durch ein Gewebe gebildet sein und es empfiehlt sich, wenn thermoplastisch gebundene Fasern für die Verstärkungselemente bzw. eine Verstärkungsmatte angewendet werden.

Bevorzugte Ausbildungen der Erfindung werden nun anhand der Figuren näher erläutert. Dabei zeigen:
- Figur 1: einen schematischen Teilquerschnitt durch ein erfindungsgemäßes schallabsorbierendes Bauteil 1;
- Figur 2: einen vergrößerten Teilschnitt durch eine weitere Ausbildung der Erfindung;
- Figur 3: einen schematischen Querschnitt durch ein mit einem Träger 2 verbundenen erfindungsgemäßen Bauteil, dessen dem Schalleinfall zugewandte Außenseite, welche von den Böden gebildet wird, sich nicht nur in eine Ebene befindet;
- Figur 4: einen Figur 3 entsprechenden Querschnitt, bei dem sich der Träger 2 in unterschiedlichen Ebenen befindet;
- Figuren: 4a, 4b und 4c im Querschnitt verschiedene Verformungsstufen während des Herstellungsverfahrens eines erfindungsgemäßen Bauteils,
- Figur 5: einen weiteren schematischen Querschnitt durch einen erfindungsgemäßen Bauteil in einer weiteren Verfahrensstufe und
- Figur 6: eine Aufsicht auf einen aufgeschnittenen Teil des Bauteils.

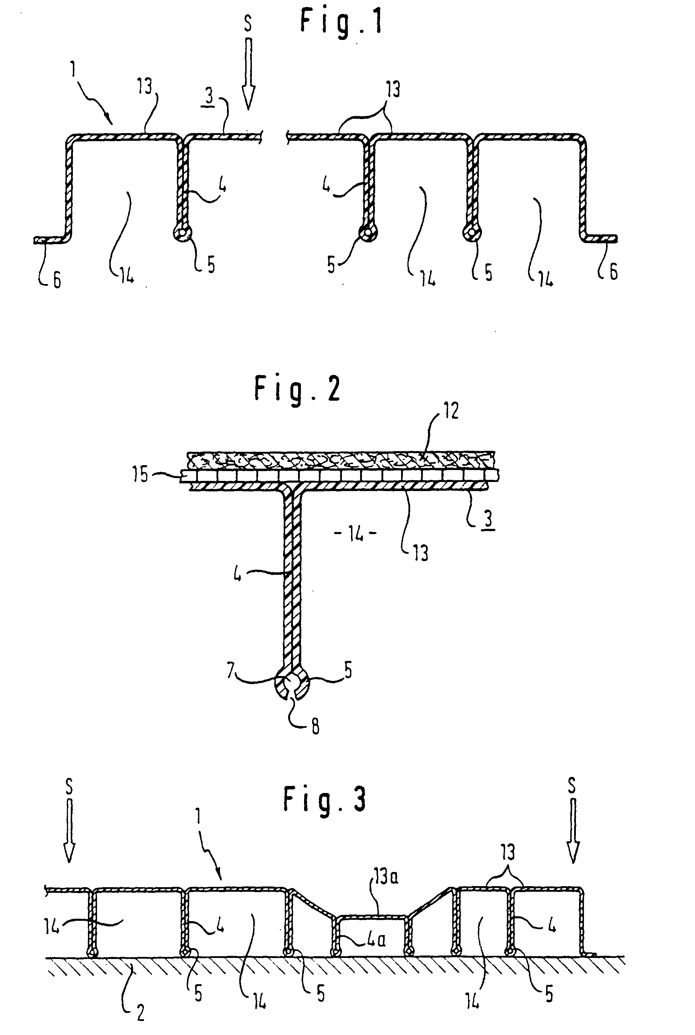

Gemäß Figur 1 ist der Bauteil 1 gebildet durch eine Mehrzahl von Kammern 14, die neben und gegebenenfalls hintereinander (in der Figur 1 nicht dargestellt) angeordnet sind. Die Kammern 14 sind jeweils durch Trennwände 4 voneinander getrennt. Am äußeren Rand ist der Bauteil 1 durch einen Flansch 6 abgeschlossen, der sich in der Ebene der verdickten Trennwandenden 5 erstreckt und als Befestigungsmittel an beispielsweise einem Träger 2 (vergleiche Figur 3) dienen kann. Dem Schalleinfall sind die Böden 13 der Kammern 14 zugewandt, welche ebenso wie die Trennwände 4 aus einer Folie 3 im Tiefziehverfahren hergestellt sind. Der Schalleinfall ist durch die Pfeile versinnbildlicht, welche mit dem Buchstaben "S" versehen sind.

Gemäß Figur 2 sind die Böden 13 an der dem Schalleinfall zugewandten Seite mit einem Schallwellen zusätzlich dämpfenden Vlies 12 abgedeckt. Zur Verstärkung dient ein Verstärkungsgitter 15, das zwischen die Böden 13 bzw. die Folie 3 und das Vlies 12 eingelegt ist und mit dem Vlies 12 und der Folie 3 thermisch zusammengeschweißt sein kann. Bei diesem Ausführungsbeispiel ist der verdickte Trennwandrand 5 durch einen Schlitz 8 aufgeschnitten, der in den Innenbereich 7 führt, aus dem hier nicht mehr gezeigte Stäbe durch den Schlitz 8 hindurch entnommen sind, welche Teile eines Tiefziehwerkzeugs bilden.

Bei der Ausbildungsform von Figur 3 weisen die Kammern 14 nicht die gleiche Größe auf, sondern befinden sich Kammerböden 13a in geringerem Abstand vom Träger 2 als andere Kammerböden 13. Auch die Querschnittsbreite von Kammern 14 ist unterschiedlich gewählt, so daß aufgrund der Feder-Masse-Effekte unterschiedliche Schallfrequenzen "gedämpft" werden.

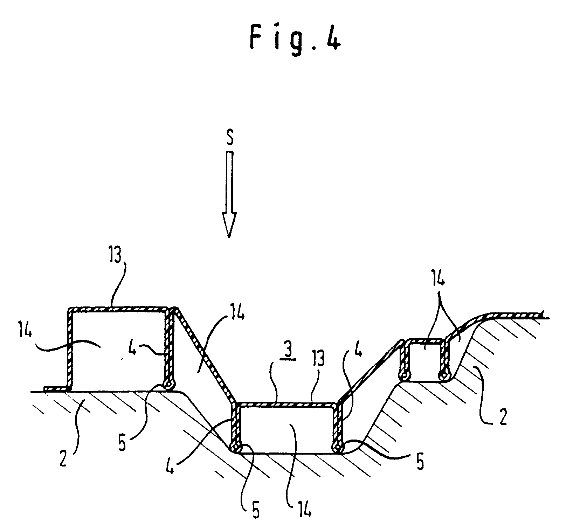

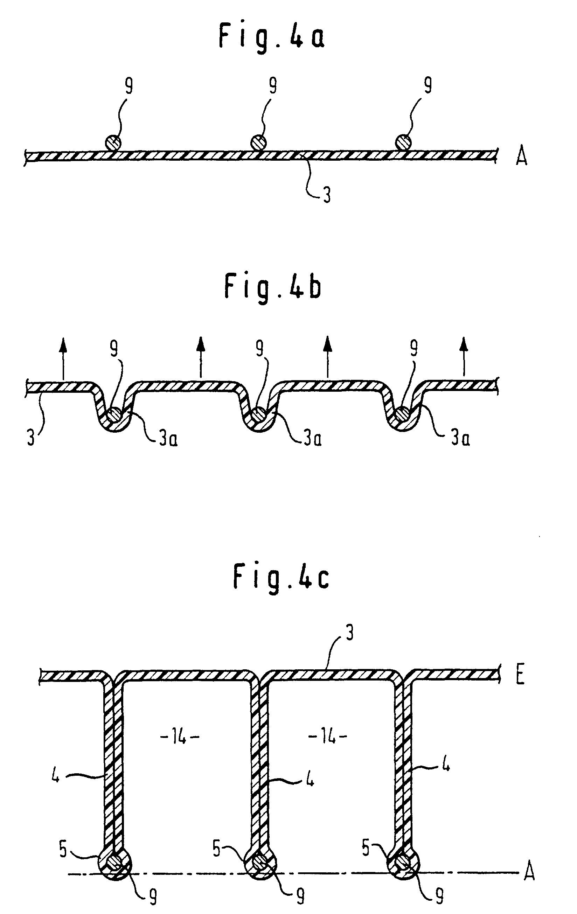

Bei dem schallabsorbierenden Bauteil nach Figur 4 befindet sich der Träger 2 nicht in einer planen Ebene; vielmehr zieht sich die dem schallabsorbierenden Bauteil zugewandte Außenfläche des Trägers 2 in unterschiedlichen und teilweise zueinander geneigten Ebenen hin. Die verdickten Trennwandenden 5 stützen sich nach Figur 4 auf entsprechenden Oberflächenteilen des Trägers 2 ab. Die Trennwände 4 erstrecken sich zwischen solchen Trennwandrändern 5 und den dem Schalleinfall S zugewandten Böden 13 des "Membranabsorbers" unter Bildung der Kammern 14 zwischen den Böden 13, den Trennwänden 4 und der Oberfläche des Trägers 2. Dies bedeutet, daß auch die verdickten Trennwandenden bzw. Trennwandränder 5 sich nicht in einer planen Ebene befinden, sondern den Außenkonturen des Trägers 2 angepaßt sind, was im Herstellungsverfahren des Bauteils bereits berücksichtigt wird.

Ein besonders einfaches Herstellungsverfahren wird anhand der Figuren 4a bis 4c wie folgt demonstriert:
Eine dünne Folie 3 aus PP (Polypropylen) mit der Dicke von 1-5 mm wird von unten gemäß Figur 4a an Stäbe 9 angedrückt, die in Form eines Gitters mit zueinander jeweils rechtwinklig angeordneten Gitterstäben vereint sind. Bei diesem "Anfangsstadium" des Herstellungsverfahrens gemäß Figur 4a befindet sich die Folie 3 in einer einzigen planen Ebene.

Danach wird die erwärmte Folie 3 bei feststehenden Stäben 9 bzw. feststehendem Gitter aus diesen Stäben 9 gemäß Figur 4b nach oben in Pfeilrichtung gezogen, wodurch Teile der plastisch verformbaren Folie 3 im Bereich der Stäbe 9 Rinnen bzw. Falten 3a bilden.

Gemäß Figur 4c ist das endgültige "Tiefziehstadium" schematisch gezeigt, bei dem die Folie 3 aus der Ursprungsebene A von Figur 4a in die endgültige Ebene E im Abstand von A herausgezogen wurde. Die Stäbe 9 befinden sich im Inneren des verdickten Randes 5 der Trennwände 4, welche aus einer Doppellage der aus der Folienebene E hier unter rechtem Winkel herausgezogenen Folienteile gebildet sind. Die Falten 3a von Figur 4b sind wesentlich länger gezogen und haben sich zu den Trennwänden 4 zwischen den hierdurch gebildeten Kammern 14 zusammengelegt.

Die Stäbe 9 können in den Trennwandenden 5 verbleiben. Das aus den Stäben 9 gebildete "Tiefziehgitter" ist bei diesem Ausführungsbeispiel dann ein "verlorenes Gitter", das einerseits die Anwendung eines weiteren Verfahrensschrittes überflüssig macht, andererseits aber auch zur Verstärkung der Randbereiche 5 der Kammern 14 beiträgt.

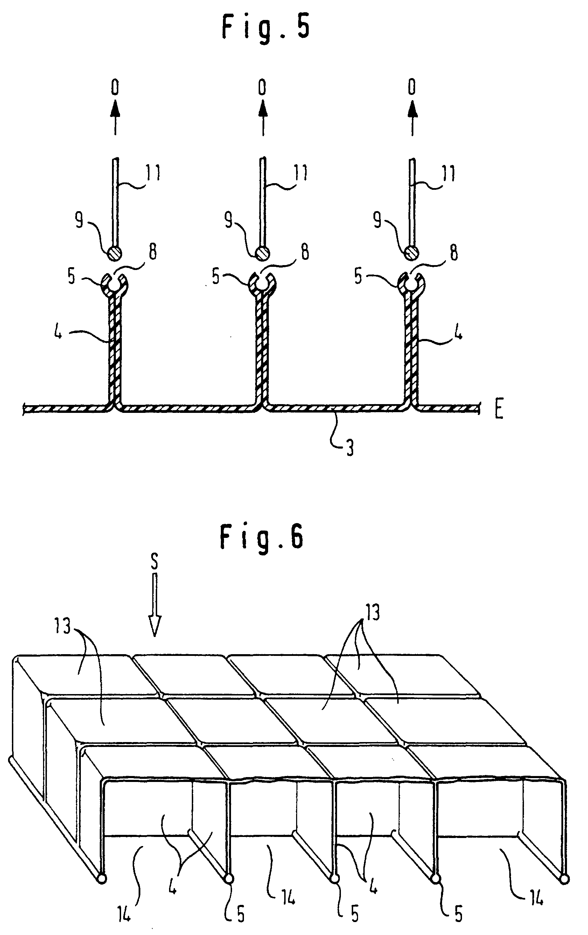

Sind solche Verstärkungen und "verlorene Gitter" nicht erwünscht, kann nach dem Ausführungsbeispiel von Figur 5 auch dafür gesorgt werden, daß die verdickten Trennwandenden 5 aufgetrennt und die Stäbe 9 durch ein Werkzeug 11 herausgeholt werden. Bei dem Ausführungsbeispiel von Figur 5 befindet sich die Folienebene E unten, so daß das Werkzeug 11 zum Herausholen der Stäbe 9 eine Aufwärtsbewegung in Pfeilrichtung O nach oben durchführen müßte. Das aus den Stäben 9 gebildete Gitter läßt sich entweder mit einem im Oberstempel der Tiefziehmaschine befindlichen Stanzmesser aus den Trennwandenden 5 herausschneiden oder es kann auch durch Erhitzen der Trennwandränder herausgeschmolzen werden. Nach einer Ausbildung des Herstellungsverfahrens wird die Folie 3 von einem Oberstempel über das Gitter auf das oben schon genannte schalldämmende Vlies 12 und mit diesem auf eine Art "Tiefziehbett" gezogen. Die Folie 3, die von einem hier nicht gezeigten Rahmen gehalten ist, wird von oben nach unten über das Gitter auf das "Tiefziehbett" zu bewegt. Hierdurch werden Folienbereiche zur Bildung der Trennwände 4 gleichfalls nach unten gezogen und gleichzeitig die Kammern 14 gebildet. Die verdickten Trennwandränder 5 befinden sich dann oben, so daß von oben beispielsweise gemäß Figur 5 ein Oberstempel nach unten fährt und die oben liegenden Teile der Trennwandenden aufschneidet und bis zu den Stäben 9 eindringt. Beim Zurückfahren des Oberstempels nach oben werden die Gitterstäbe 9 mit nach oben gezogen und aus dem Bauteil 1 entnommen.

In Figur 6 ist eine schematische Schrägaufsicht auf einen solchen aus einem Kammersystem zusammengesetzten Bauteil 1 gezeigt.

Das Material für den Bauteil ist nicht auf Kunststoff und auch nicht auf thermoplastischen Kunststoff beschränkt. Es ist auch möglich, eine dünne Aluminiumfolie zu verwenden und durch Tiefziehen für die Ausformung eines entsprechenden Kammersystems zu sorgen.

Bevorzugte Anwendungen der Erfindungen befinden sich im Umfeld von Motoren, insbesondere Kraftfahrzeugmotoren. Dort kann die Motorkapsel oder das Motorhaubenblech als Träger dienen, auf dem das erfindungsgemäße Bauteil mit den freien Trennwandenden aufgesetzt und durch Schweißen, Kleben, Klipsen und dergleichen verbunden wird.

## Patentansprüche

1. Verfahren zur Herstellung eines schallabsorbierenden Bauteils, bei dem zu einem fachartigen Kammersystem zusammengesetzte Kammern (14) dünne Seitenwände aufweisen und Resonanzkammern bzw. akustische Resonatoren bilden, bei dem eine Folie (3) zur Bildung der Seitenwände verformt wird,
**dadurch gekennzeichnet,**
**daß** die Folie (3) auf ein Gebilde aus im Abstand voneinander verlaufenden Stäben (9) aufgesetzt oder an ein solches Gebilde angelegt und anschließend zur Bildung der Trennwände (4) zwischen Kammern (14) aus dieser Anlageebene (A) in eine davon beabstandete Endebene (E) mindestens teilweise um die Stäbe (9) herumgezogen und derart verformt wird, daß sich dünne Seitenwände benachbarter Kammern (14) zu Trennwänden (4) derselben aneinanderlegen.

2. Verfahren nach Anspruch 1,
**dadurch gekennzeichnet,**
**daß** die Stäbe (9) nach dem Folien-Ziehen aus den verdickten Trennwandenden (5) herausgelöst werden.

3. Verfahren nach Anspruch 1,
**dadurch gekennzeichnet,**
**daß** die Stäbe (9) nach dem Folien-Ziehen in den verdickten Trennwandenden (5) belassen bleiben.

4. Verfahren nach einem der vorhergehenden Ansprüche,
**dadurch gekennzeichnet,**
**daß** eine Folie (3) einer Dicke zwischen 0,1 und 5 mm zum Tiefziehen verwendet wird.

5. Schallabsorbierender Bauteil,
bei dem zu einem fachartigen Kammersystem zusammengesetzte Resonanzkammern (14) mit den Kammerböden (13) aus einer Folie (3) und den Kammer-Seitenwänden aus einem Stück geformt sind, insb. hergestellt nach einem der Ansprüche 1 -4,
**dadurch gekennzeichnet,**
**daß** die Seitenwände zur Bildung von Trennwänden (4) zwischen benachbarten Kammern (14) aneinanderanliegen.

6. Bauteil nach Anspruch 5,
**dadurch gekennzeichnet,**
**daß** die Böden (13, 13a) der Kammern (14) dem Schalleinfall zugewandt sind.

7. Bauteil nach Ansprüche 5 oder 6,
**dadurch gekennzeichnet,**
**daß** die Böden (13, 13a) der Kammern (14) aus Folie (3) bestehen und als dünne Membrane wirken.

8. Bauteil nach Ansprüche 5 - 7,
**dadurch gekennzeichnet,**
**daß** die Böden (13, 13a) an ihrer Außenseite mit einer schallabsorbierenden bzw. schalldämpfenden und/oder mit einer hitzeabweisenden Schicht (12) bedeckt sind.

9. Bauteil nach Anspruch 8,
**dadurch gekennzeichnet,**
**daß** die schallabsorbierende bzw. schalldämpfende Schicht (12) aus einem Vlies besteht.

10. Bauteil nach Anspruch 8,
**dadurch gekennzeichnet,**
**daß** die schallabsorbierende bzw. -dämpfende Schicht (12) aus Schaumstoff besteht.

11. Bauteil nach Anspruch 9,
**dadurch gekennzeichnet,**
**daß** zwischen den Böden (13) der Kammern (14) und dem Vlies eine Verstärkungsmatte (15) eingesetzt ist.

12. Bauteil nach Anspruch 11,
**dadurch gekennzeichnet,**
**daß** die Verstärkungsmatte (15) thermoplastisch gebundene Fasern aufweist.

13. Bauteil nach einem der Ansprüche 5-12,
**dadurch gekennzeichnet,**
**daß** die Ränder der Kammern (14) bzw. die freien Enden (5) der Trennwände (4) im Querschnitt gegenüber dem Wanddurchschnitt der Trennwände Verdickungen aufweisen.

14. Bauteil nach Anspruch 13,
**dadurch gekennzeichnet,**
**daß** die Trennwandenden (5) Bestandteile eines Tiefziehwerkzeugs aufweisen.

15. Bauteil nach Anspruch 14,
**dadurch gekennzeichnet,**
**daß** in die Trennwandenden (5) Bestandteile eines Gitters (9) eingebettet sind.

16. Bauteil nach einem der Ansprüche 5-15,
**dadurch gekennzeichnet,**
**daß** die Trennwandenden (5) mit einem Träger (2) verbunden sind.

## Claims

1. Method of manufacturing a sound absorber component wherein chambers (14) composed to form a compartment-like chamber system present thin sidewalls and constitute resonance chambers or acoustic resonators, respectively,
wherein a sheet (3) is shaped to form the sidewalls,
**characterised in**
**that** said sheet (3) is placed on a structure consisting of bars (9) extending at a distance from each other or is placed against such a structure and is then drawn about said bars (9) at least partly for forming said partitioning walls (4) between said chambers (14) out of this placing plane (A) into a final plane (E) spaced therefrom, and is so shaped that thin sidewalls of adjacent chambers (14) are placed against each other to form partitioning walls (4) of these chambers.

2. Method according to Claim 1,
**characterised in**
**that** said bars (9) are detached from said thickened ends (5) of said partitioning walls after the sheet has been drawn.

3. Method according to Claim 1,
**characterised in**
**that** said bars (9) are left in said thickened ends (5) of said partitioning walls after the sheet has been drawn.

4. Method according to any of the preceding Claims,
**characterised in**
**that** a sheet (3) having a thickness between 0.1 and 5 mm is used for deep-drawing.

5. Sound absorber component,
wherein resonance chambers (14) with the chamber bottoms (13), which are composed to form a compartment-like chamber system, are shaped in one piece from a sheet (3) and the sidewalls of said chambers, particularly manufactured in accordance with any of the Claims 1 to 4,
**characterised in**
**that** the sidewalls are disposed side by side for forming partitioning walls (4) between adjacent chambers (14).

6. Component according to Claim 5,
**characterised in**
**that** the bottoms (13, 13a) of said chambers (14) face the sound incidence.

7. Component according to Claim 5 or 6,
**characterised in**
**that** the bottoms (13, 13a) of said chambers (14) consist of a sheet (3) and produce the effect of a thin membrane.

8. Component according to the Claims 5 to 7,
**characterised in**
**that** the bottoms (13, 13a) are covered on their outside with a sound-absorbing or sound-attenuating layer (12) and/or with a heat-repelling layer (12).

9. Component according to Claim 8,
**characterised in**
**that** said sound-absorbing or sound-attenuating layer (12) consists of a non-woven material.

10. Component according to Claim 8,
**characterised in**
**that** said sound-absorbing or attenuating layer (12) consists of foamed material.

11. Component according to Claim 9,
**characterised in**
**that** a reinforcing mat (15) is inserted between the bottoms (13) of said chambers (14) and said non-woven material.

12. Component according to Claim 11,
**characterised in**
**that** said reinforcing mat (15) comprises thermoplastically bound fibres.

13. Component according to any of the Claims 5 to 12,
**characterised in**
**that** the edges of said chambers (14) or the free ends (5) of said partitioning walls (4), respectively, present thickened portions in the cross-section opposite to the cross-section of said partitioning walls.

14. Component according to Claim 13,
**characterised in**
**that** the ends (5) of said partitioning walls comprise elements of a deep-draw-ing tool.

15. Component according to Claim 14,
**characterised in**
**that** elements of a lattice (9) are embedded in the ends (5) of said partitioning walls.

16. Component according to any of the Claims 5 to 15,
**characterised in**
**that** the ends (5) of said partitioning walls are connected to a support (2).

## Revendications

1. Procédé de fabrication d'un élément à absorption acoustique, dans lequel des chambres (14), composée de façon à former un système de chambres similaire à un système à cases, présentent des parois latérales minces, en constituant des chambres de résonance ou respectivement des résonateurs acoustiques, dans lequel une feuille (3) est façonnée afin de former des parois latérales,
**caractérisé en ce**
**que** ladite feuille (3) est placée sur une structure composée de barres (9), qui s'étendent à un écart l'un de l'autre, ou est placée contre une telle structure, et est ensuite tirée autour desdites barres (9), au moins en partie, afin de former lesdits cloisons (4) entre lesdites chambres (14), en dehors de ce plan de placement (A) dans un plan final (E) écarté du premier, en étant façonnée de façon, que des parois latérales minces des chambres adjacentes (14) soient placées l'une à côté de l'autre afin de former les cloisons (4) de ces chambres.

2. Procédé selon la revendication 1,
**caractérisé en ce**
**que** lesdites barres (9) sont détachées desdites extrémités épaisses (5) desdits cloisons après que la feuille était tirée.

3. Procédé selon la revendication 1,
**caractérisé en ce**
**que** lesdites barres (9) restent dans lesdites extrémités épaisses (5) desdits cloisons après que la feuille était tirée.

4. Procédé selon une quelconque des revendications précédentes,
**caractérisé en ce**
**qu'**une feuille (3) à une épaisseur entre 0,1 et 5 mm est utilisée pour l'emboutissage.

5. Élément à absorption acoustique,
dans lequel des chambres à résonance (14) avec les fonds de chambre (13), qui sont composées de façon à former un système de chambre du type d'un système à cases, sont façonnées en une seule pièce d'une feuille (3) et les parois latérales desdites chambres, et fabriquées, en particulier, selon une quelconque des revendications 1 à 4,
**caractérisé en ce**
**que** les parois latérales sont disposées l'une du côté à l'autre de façon à former des cloisons (4) entre des chambres adjacentes (14).

6. Composant selon la revendication 5,
**caractérisé en ce**
**que** les fonds (13, 13a) desdites chambres (14) sont tournés vers l'incidence du son.

7. Composant selon la revendication 5 ou 6,
**caractérisé en ce**
**que** les fonds (13, 13a) desdites chambres (14) consistent en une feuille (3) et produisent l'effet d'une membrane mince.

8. Composant selon les revendications 5 à 7,
**caractérisé en ce**
**que** les fonds (13, 13a) sont recouverts, du côté extérieur, par une couche à absorption acoustique ou antisonore (12) et/ou par une couche repoussante la chaleur (12).

9. Composant selon la revendication 8,
**caractérisé en ce**
**que** ladite couche à absorption acoustique ou antisonore (12) consiste en un non-tissé.

10. Composant selon la revendication 8,
**caractérisé en ce**
**que** ladite couche à absorption acoustique ou (12) consiste en un matériau alvéolaire.

11. Composant selon la revendication 9,
**caractérisé en ce**
**qu'**une nappe de renforcement (15) est insérée entre les fonds (13) desdites chambres (14) et ledit non-tissé.

12. Composant selon la revendication 11,
**caractérisé en ce**
**que** ladite nappe de renforcement (15) comprend des fibres liées de façon thermoplastique.

13. Composant selon une quelconque des revendications 5 à 12,
**caractérisé en ce**
**que** les bords desdites chambres (14) ou respectivement les extrémités libres (5) desdits cloisons (4) présentent des parties épaisses en coupe transversale, en face de la coupe transversale desdits cloisons.

14. Composant selon la revendication 13,
**caractérisé en ce**
**que** les extrémités (5) desdits cloisons comprennent des éléments d'un outil d'emboutissage.

15. Composant selon la revendication 14,
**caractérisé en ce**
**que** des éléments d'un treillis (9) sont noyés dans les extrémités (5) desdits cloisons.

16. Composant selon une quelconque des revendications 5 à 15,
**caractérisé en ce**
**que** les extrémités (5) desdits cloisons sont raccordées à un support (2).
